# EUROPEAN PATENT SPECIFICATION

(11) **EP 4 418 395 B1**
(45) Date of publication and mention of the grant of the patent: **28.10.2026**
(21) Application number: 23799725.9
(22) Date of filing: 04.05.2023
(51) Int. Cl.: H01M 10/058, H01M 4/139, H01M 4/04, H01M 10/052, H01M 4/38, H01M 4/48, H01M 4/02, H01M 10/0587, H01M 50/109

(54) **METHOD FOR MANUFACTURING ELECTRODE ASSEMBLY**
VERFAHREN ZUR HERSTELLUNG EINER ELEKTRODENANORDNUNG
PROCÉDÉ DE FABRICATION D'ENSEMBLE ÉLECTRODE

(30) Priority: 06.05.2022 KR 20220055965
(43) Date of publication of application: 21.08.2024
(73) Proprietor: LG Energy Solution, Ltd., Seoul 07335 (KR)
(72) Inventor: CHAE, Jonghyun, Daejeon 34122 (KR); LEE, Ilha, Daejeon 34122 (KR); JEON, Seoyoung, Daejeon 34122 (KR); KOO, Daeryung, Daejeon 34122 (KR); KWON, Yohan, Daejeon 34122 (KR); KIM, Sarah, Daejeon 34122 (KR); JOO, Mun Kyu, Daejeon 34122 (KR)
(74) Representative: Hoffmann Eitle
(86) International application number: PCT/KR2023/006164
(87) International publication number: WO 2023/214844

(56) References cited:
- JP-A- H10 302 839
- KR-A- 20180 124 724
- KR-A- 20200 087 437
- KR-B1- 101 329 905
- KR-B1- 102 283 684
- US-A1- 2005 079 420
- US-A1- 2017 324 073

## Description

### [Technical Field]

The present application relates to a method for manufacturing an electrode assembly.

The present application claims priority to and the benefit of Korean Patent Application No. 10-2022-0055965 filed in the Korean Intellectual Property Office on May 6, 2022.

### [Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the technology development and the increase in demand for mobile devices, the demand for secondary batteries as an energy source is sharply increasing. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, an electrolyte, and a separator. The negative electrode includes a negative electrode active material for intercalating and deintercalating lithium ions to and from the positive electrode, and silicon-based particles having a high discharge capacity may be used as the negative electrode active material.

In general, a carbon material such as graphite is used for a negative electrode of a lithium secondary battery, but the theoretical capacity density of carbon is 372 mAh/g (833 mAh/cm³). Therefore, in order to improve the energy density of the negative electrode, silicon (Si), tin (Sn), and oxides and alloys thereof, which are alloyed with lithium, are considered as negative electrode materials. Among them, silicon-based materials have attracted attention due to their low cost and high capacity (4200 mAh/g).

However, the silicon has a problem in that volume change (shrinkage or expansion) occurs during the intercalation/deintercalation of lithium ions, resulting in deterioration of mechanical stability, and as a result, cycle characteristics are impaired. Therefore, it is necessary to develop a material having structural stability, which is excellent in stability when used as an active material of an electrochemical device, and capable of ensuring cycle characteristics.

In addition, in the case of using a silicon-based negative electrode active material, a problem arises in that the initial irreversible capacity is large. In the charging and discharging reactions of the lithium secondary battery, lithium discharged from the positive electrode is intercalated into the negative electrode during charging, and is deintercalated from the negative electrode to return to the positive electrode again during discharging. In the case of the silicon-based negative electrode active material, the volume change and the surface side reaction are severe, so that a large amount of lithium intercalated in the negative electrode during initial charging does not return to the positive electrode again, and thus an initial irreversible capacity increases. When the initial irreversible capacity increases, there occurs a problem that the battery capacity and the cycle are rapidly reduced.

In order to solve the above problem, known is a pre-lithiation method of a silicon negative electrode including a silicon-based negative electrode active material. As the pre-lithiation method, known methods include a method of manufacturing an electrode after lithiation by a physicochemical method such as electrolytic plating, lithium metal transfer, and lithium metal deposition, a method of electrochemically pre-lithiating a negative electrode, and the like.

However, the physicochemical method of the related art involves a possibility of danger, such as fire and explosion, due to environmental factors that the method should be performed at high temperatures. In addition, the electrochemical method of the related art cannot uniformly control the initial irreversible capacity and increases production cost.

In particular, in the lithium metal transfer process, it is difficult to transfer lithium metal safely and easily, and even if lithium metal is transferred, the highly reactive lithium metal immediately starts reacting with the negative electrode active material, thereby causing problems such as particle breakage on the surface of the negative electrode active material layer.

In order to solve the problem, research is being conducted to control a pre-lithiation rate of the lithium metal layer by pre-treating a negative electrode active material layer before transferring a lithium metal layer or by including a diffusion rate control layer on top of the negative electrode active material layer. However, such a process causes problems in that the battery manufacturing cost increases and the cell resistance increases.

Therefore, in pre-lithiating the negative electrode, it is necessary to research a process and a material that can uniformly pre-lithiate lithium in a negative electrode active material layer in a more safe and efficient manner.

US 2005/0079420 A1 describes a method of preparing a lithium metal anode including forming a current collector on a substrate that includes a release component; depositing a lithium metal on the current collector; and releasing the current collector with the deposited lithium metal from the substrate.

US 2017/0324073 A1 concerns a lithium ion battery comprising a positive electrode, a negative electrode and a separator coated with a thin film of lithium metal, the thickness of the lithium being less than or equal to a thickness sufficient to compensate for the irreversible loss of lithium during the first cycle of the battery.

### [Citation List]

### [Patent Literature]

Japanese Patent Application Publication No. 2009-080971

### [Detailed Description of the Invention]

### [Technical Problem]

The present application relates to a method for manufacturing an electrode assembly, an electrode assembly, and a lithium secondary battery including the same.

### [Technical Solution]

An exemplary embodiment of the present specification provides a method for manufacturing an electrode assembly, the method including:
preparing a transfer laminate in which a base layer, a surface protection layer, and a lithium metal layer are sequentially stacked;
transferring the surface protection layer and the lithium metal layer to a separator so that the lithium metal layer comes into contact with the separator; and
forming an electrode assembly by positioning the separator between a negative electrode and a positive electrode such that an electrode selected from the negative electrode and the positive electrode and the surface protection layer face each other;
in which a thickness of the lithium metal layer transferred in the transferring of the surface protection layer and the lithium metal layer to the separator is 1 µm or greater and 10 µm or less.

Further described herein is an electrode assembly manufactured by the manufacturing method according to the present application.

Further, the present application provides a lithium secondary battery including a battery casing; the electrode assembly according to the present application provided inside the battery casing; and an electrolyte.

### [Advantageous Effects]

The method for manufacturing an electrode assembly according to an exemplary embodiment of the present invention is to be able to uniformly transfer lithium even without an additional laminate structure such as a buffer layer on a negative electrode or positive electrode active material layer, in a pre-lithiation process of transferring a lithium metal layer onto the negative electrode or positive electrode active material layer for pre-lithiation.

That is, in the method for manufacturing an electrode assembly according to the present application, the lithium metal layer is not directly transferred to the top of the negative electrode or positive electrode active material layer as in the related art, but is transferred to one surface of the separator, and then pre-lithiation is caused to proceed in contact with the separator in a process of laminating the separator with a negative electrode or positive electrode during the manufacture of the battery assembly, or pre-lithiation of the negative electrode or positive electrode is caused to proceed after preparing a cell assembly and injecting an electrolyte.

In particular, as the surface protection layer and the lithium metal layer are transferred to the separator at the same time, the lithium metal layer can be prevented from being exposed to the air. In addition, the lithium metal layer is transferred to the separator together with the surface protection layer to form a structure in which the negative electrode or positive electrode active material layer and the surface protective layer are in contact with each other during later pre-lithiation, so that a process of providing a separate layer for adjusting a pre-lithiation rate on top of the negative electrode or positive electrode active material layer is not required.

Accordingly, it is possible to easily control the pre-lithiation rate in the negative electrode or positive electrode active material layer as in the related art, and it is economical because it is not required to provide a separate layer such as a buffer layer. Further, if a separate layer is provided, a problem such as an increase in electrode resistance occurs, but the method according to the present application can solve such a problem.

### [Brief Description of Drawings]

FIG. 1 shows a method for manufacturing an electrode assembly according to an exemplary embodiment of the present application.
FIG. 2 shows lithium metal transferred to a separator (5 cm x 5 cm).
FIG. 3 is a diagram showing an initial charge/discharge curve of NCMA/Li cells (Example 1 of the present invention and Comparative Example 1).
FIG. 4 is a diagram showing an initial charge/discharge curve of Si/Li cells (Example 2 of the present invention and Comparative Example 2).

### [Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In this specification, the "specific surface area" is measured by the BET method, and specifically, is calculated from a nitrogen gas adsorption amount at a liquid nitrogen temperature (77K) by using BELSORP-mino II available from BEL Japan, Inc. That is, in the present application, the BET specific surface area may refer to the specific surface area measured by the above measurement method.

In the present specification, "Dn" means an average particle diameter, and means a particle diameter at the n% point in the cumulative distribution of the number of particles according to the particle diameter. That is, D50 is a particle diameter at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Meanwhile, the average particle diameter may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.

In the present specification, the description "a polymer includes a certain monomer as a monomer unit" means that the monomer participates in a polymerization reaction and is included as a repeating unit in the polymer. In the present specification, when a polymer includes a monomer, this is interpreted as the same as that the polymer includes a monomer as a monomer unit.

In the present specification, it is understood that the term 'polymer' is used in a broad sense including a copolymer unless otherwise specified as 'a homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight.

In the present specification, a molecular weight refers to a weight-average molecular weight unless particularly described otherwise.

Hereinafter, exemplary embodiments of the present invention will be described in detail with reference to the drawings so that one skilled in the art can readily implement the present invention.

An exemplary embodiment of the present specification provides a method for manufacturing an electrode assembly, the method including: preparing a transfer laminate in which a base layer, a surface protection layer, and a lithium metal layer are sequentially stacked; transferring the surface protection layer and the lithium metal layer to a separator so that the lithium metal layer comes into contact with the separator; and forming an electrode assembly by positioning the separator between a negative electrode and a positive electrode such that an electrode selected from the negative electrode and the positive electrode and the surface protection layer face each other, in which a thickness of the lithium metal layer transferred in the transferring of the surface protection layer and the lithium metal layer to the separator is 1 µm or greater and 10 µm or less.

In the method for manufacturing an electrode assembly according to the present application, the lithium metal layer is not directly transferred to the top of the negative electrode or positive electrode active material layer as in the related art, but is transferred to one surface of the separator, and then pre-lithiation is caused to proceed in contact with the separator in a process of laminating the separator with a negative electrode or positive electrode during the manufacture of the electrode assembly, or pre-lithiation of the negative electrode or positive electrode is caused to proceed after preparing a cell assembly and injecting an electrolyte.

In particular, as the surface protection layer and the lithium metal layer are transferred to the separator at the same time, the lithium metal layer can be prevented from being exposed to the air. In addition, the lithium metal layer is transferred to the separator together with the surface protection layer to form a structure in which the negative electrode or positive electrode active material layer and the surface protection layer are in contact with each other during later pre-lithiation, so that a process of providing a separate layer for adjusting a pre-lithiation rate on top of the negative electrode active material layer is not required.

Hereinafter, the method for manufacturing an electrode assembly of the present application will be described in detail.

The method for manufacturing an electrode assembly according to an exemplary embodiment of the present application includes a step of preparing a transfer laminate in which a base layer, a surface protection layer, and a lithium metal layer are sequentially stacked.

This step corresponds to a step of preparing a transfer laminate for transferring a lithium metal layer onto a separator.

In an exemplary embodiment of the present application, the base layer can be used without limitation as long as it has features capable of withstanding process conditions such as high temperature in the step of depositing the lithium metal layer, and preventing a reverse peeling problem that the lithium metal layer is transferred onto the base layer during a winding process for transferring the deposited lithium metal layer.

Specifically, in an exemplary embodiment of the present application, the base layer may be one or more selected from the group consisting of polyethylene terephthalate (PET), polyimide (PI), poly(methylmethacrylate)(PMMA), polypropylene, polyethylene and polycarbonate.

In an exemplary embodiment of the present application, a thickness of the base layer may be 1 µm or greater and 300 µm or less, and may satisfy a range of 5 µm or greater and 200 µm or less, and 10 µm or greater and 100 µm or less.

In an exemplary embodiment of the present application, a thickness of the lithium metal layer transferred to the separator may be 1 µm or greater and 10 µm or less, and preferably may satisfy a range of 2 µm or greater and 10 µm or less.

When the thicknesses of the base layer and the lithium metal layer satisfy the above range, the transfer of the lithium metal to the negative electrode or positive electrode active material layer can occur efficiently and the reverse transfer can be prevented.

In addition, if the thickness of the lithium metal layer transferred to the separator is less than 2 µm, the initial irreversible capacity compensation of the negative electrode is insufficient, limiting the initial efficiency improvement of the battery, or the improvement in cycle life performance of the battery due to insufficient compensation of lithium loss during cycle charging and discharging. If the thickness exceeds 10 µm, lithium is supplied to the battery more than necessary, resulting in an increase in the manufacturing cost of the battery, an increase in the non-uniformity of the pre-lithiation quality of the electrode, or the overcharging during the initial charging after manufacturing the battery.

In an exemplary embodiment of the present application, a surface roughness averaged from 10 measurements of the lithium metal layer may be 0.02 µm or greater and 0.2 µm or less, and preferably may satisfy a range of 0.02 µm or greater and 0.1 µm or less.

When the surface roughness of the lithium metal layer satisfies the above range, the transfer of the lithium metal layer to the separator can occur efficiently and the reverse transfer can be prevented. In particular, if the surface roughness of the lithium metal layer is greater than 0.2 µm, the transfer of the lithium metal layer to the separator may occur non-uniformly, resulting in an increase in the non-uniformity of the pre-lithiation quality of the electrode.

In the present application, the surface roughness is expressed as Sₐ (arithmetic mean height of a surface) and is calculated by the Formula below as a concept that extends Ra (arithmetic mean height of a line) to the surface. Specifically, the surface roughness is a value obtained by obtaining a height of a peak (portion higher than the arithmetic mean surface) or a depth of a valley (portion lower than the arithmetic mean surface) in the arithmetic mean surface as an absolute value, integrating the absolute value with respect to the xy area for which the surface roughness is to be obtained and dividing the integral result by the xy area (A). ${S}_{a} = \frac{1}{A} ∬ \left|Z\left(x, y\right)\right| dxdy$

When transferring the lithium metal layer for which SLMP powder is used to the separator, the SLMP powder should be rolled and then sheeted and transferred to the separator. However, general SLMP powder has a large average particle diameter of about 30 µm, so it is difficult to control the thickness within the thickness range of the lithium metal layer according to this application. In addition, even when the SLMP powder is made into a sheet form, the SLMP particle size is not constant and there is some SLMP powder that remains in the form of particle, and accordingly, the surface roughness is formed greater than that of the lithium metal layer according to the present application. As a result, it is difficult to precisely control the degree of pre-lithiation, and the non-uniformity of the pre-lithiation quality of the electrode increases.

In an exemplary embodiment of the present application, a surface protection layer is further included on a surface in contact with the base layer and lithium metal layer of the transfer laminate in order to improve the peelability of the lithium metal layer and to secure the transferability to the separator.

That is, the base layer may have a surface protection layer formed on at least one surface, or may have surface protection layers formed on both surfaces. The surface protection layer makes it possible to prevent a reverse peeling problem that the lithium metal layer is transferred onto the base layer during a process for transferring the deposited lithium metal layer to the separator, and also makes it possible to easily separate the base layer after transferring the lithium metal layer onto the separator.

In an exemplary embodiment of the present application, there is provided the method for manufacturing an electrode assembly in which the surface protection layer includes one or more selected from the group consisting of a polymer, a conductive material and an inorganic particle.

In an exemplary embodiment of the present application, the polymer may include one or more selected from the group consisting of an acrylic polymer, a fluorine polymer, and a silicone polymer.

In an exemplary embodiment of the present application, for the conductive material, the same material as a negative electrode conductive material described later may be used.

In an exemplary embodiment of the present application, the inorganic particle may be used without limitation as long as it is an inorganic particle such as alumina or silica particle.

In particular, the surface protection layer is transferred to the separator together with the lithium metal layer when transferring the lithium metal layer to the separator. Accordingly, the surface protection layer serves as a protective film to prevent the highly reactive lithium metal layer from being exposed to the air, and at the same time, it is transferred to the top of the negative electrode or positive electrode active material layer also in a pre-lithiation process described later. Accordingly, the surface protection layer prevents direct contact between the negative electrode or positive electrode active material layer and the lithium metal layer and controls the pre-lithiation rate, thereby enabling pre-lithiation to proceed uniformly and preventing lithium loss.

In an exemplary embodiment of the present application, the surface protection layer may be formed by a coating method. For example, the coating method may be a method selected from the group consisting of dip coating, spray coating, spin coating, die coating, gravure coating, micro-gravure coating, comma coating, and roll coating, but is not limited thereto. That is, various coating methods that can be used to form a coating layer in the art can be used.

In an exemplary embodiment of the present application, a thickness of the surface protection layer may satisfy a range of 100 nm or greater and 1 µm or less.

In another exemplary embodiment, the thickness of the surface protection layer may satisfy a range of 100 nm or greater and 1 µm or less, and preferably 200 nm or greater and 1 µm or less.

The surface protection layer may be entirely dissolved in the electrolyte after the pre-lithiation process described later, or may remain on the negative electrode or positive electrode for a lithium secondary battery without being dissolved. In this case, the thickness of the surface protection layer satisfies the above range, so an electrode resistance is not problematic.

In an exemplary embodiment of the present application, the method for manufacturing an electrode assembly may include a step of transferring the surface protection layer and the lithium metal layer to a separator so that the lithium metal layer comes into contact with the separator.

The step may refer to a step of transferring the lithium metal layer onto a separator, which is a transfer target, instead of directly transferring the lithium metal layer to the negative electrode or positive electrode active material layer.

In an exemplary embodiment of the present application, there is provided the method for manufacturing an electrode assembly in which the step of transferring the surface protection layer and the lithium metal layer to the separator so that the lithium metal layer comes into contact with the separator includes laminating the lithium metal layer of the transfer laminate on one surface of the separator, and removing the base layer.

In this case, in an exemplary embodiment of the present application, there is provided the method for manufacturing an electrode assembly in which the step of transferring the surface protection layer and the lithium metal layer to the separator so that the lithium metal layer comes into contact with the separator includes pre-treating the separator, and transferring the surface protection layer and the lithium metal layer onto the pre-treated separator, in which the pre-treating includes a corona treatment or a plasma treatment.

In an exemplary embodiment of the present application, the plasma treatment may refer to a process of applying a voltage of 15 kV to a plasma generating unit for the separator, causing N₂ (800 slm) and CDA (5 slm) to flow, generating plasma, and treating a surface of the separator while causing the separator to pass through the plasma at a speed of 5 lpm.

Further, in an exemplary embodiment of the present application, the pre-treating may be performed using an indirect plasma method.

As described above, the surface of the separator is pre-treated before transferring the lithium metal layer to the separator, so that interfacial adhesion with the lithium metal layer can be improved later, and accordingly, the base layer can be easily peeled off.

In addition, in an exemplary embodiment of the present application, there is provided the method for manufacturing an electrode assembly in which the step of transferring the surface protection layer and the lithium metal layer to the separator so that the lithium metal layer comes into contact with the separator includes a dry on dry process.

That is, the transfer process according to the present application includes a dry on dry process. In the case of proceeding in this way, the lithium metal layer can be transferred to the separator without using a solvent, so there is an advantage in that a solvent washing or drying process is not required.

In addition, as the lithium metal layer is transferred to the separator through the dry on dry process as described above, a deposition thickness of the lithium metal layer can be precisely controlled within a desired range, so there is an advantage in that a pre-lithiation dosage of the negative electrode or positive electrode can be controlled very accurately later.

On the other hand, a case where the lithium metal layer is applied through a wet on dry process rather than the dry on dry process may include, specifically, a case of coating the separator with a solvent including stabilized lithium metal powder (SLMP).

When forming the lithium metal layer on the separator by the wet on dry process as described above, a solvent is generally included, so a process of washing or drying the solvent is included, resulting in a problem of lowering the economics of the process. In addition, when the wet on dry process is used, a coating weight per unit area should be adjusted during coating. In this case, there is a limit to lowering the pre-lithiation dosage. If the dosage is increased, a pressurization condition is required, and therefore, the separator including the same may be deformed.

Further, when the wet on dry process is used as described above, the coating composition may penetrate into pores of the non-uniform separator, which may cause a problem such as clogging of the pores. In addition, a problem arises in which a significant amount of unreacted lithium remains on the electrode surface even upon completion of the pre-lithiation.

However, the transfer process according to the present application can solve the above problems by including the dry on dry process. In particular, it is possible to precisely control the deposition thickness of the lithium metal layer within a desired range, so that the pre-lithiation dosage of the negative electrode or positive electrode can be very accurately controlled later, making it possible to enable almost no lithium metal layer to remain on the top of the negative electrode or positive electrode.

In an exemplary embodiment of the present application, the method for manufacturing an electrode assembly includes a step of forming an electrode assembly by positioning the separator between a negative electrode and a positive electrode such that an electrode selected from the negative electrode and the positive electrode and the surface protective layer face each other.

That is, through the above steps, a negative electrode active material layer on the negative electrode or a positive electrode active material layer on the positive electrode and the lithium metal layer are assembled while facing each other.

In an exemplary embodiment of the present application, the step of forming an electrode assembly by positioning the separator between a negative electrode and a positive electrode such that an electrode selected from the negative electrode and the positive electrode and the surface protective layer face each other may include forming a negative electrode or positive electrode current collector layer and a negative electrode or positive electrode active material layer provided on one or both surfaces of the negative electrode or positive electrode current collector layer, and forming an electrode assembly by any one of methods of stacking, pressurizing and stacking, and/or winding one surface of the negative electrode or positive electrode active material layer and one surface of the surface protection layer of the electrode assembly.

In an exemplary embodiment of the present application, the stacking method refers to a method of manufacturing an electrode assembly while stacking an electrode and a separator as they are without pressurizing the same, and the pressurizing and stacking method refer to a method of laminating and stacking a separator and an electrode under a pressurized condition, a method of pressurizing an electrode assembly after stacking the separator and the electrode, or the like. The winding method refers to a method of winding an electrode and a separator in a roll form, and is not limited to a specific method.

In addition, in an exemplary embodiment of the present application, pre-lithiation of the electrode may proceed from the step of forming an electrode assembly by positioning the separator between a negative electrode and a positive electrode such that an electrode selected from the negative electrode and the positive electrode and the surface protective layer face each other. Alternatively, pre-lithiation may proceed after injecting an electrolyte in a battery assembly step. That is, in an exemplary embodiment of the present application, the pre-lithiation may proceed anywhere on the negative electrode or the positive electrode, and dry pre-lithiation or wet pre-lithiation after electrolyte injection may proceed.

The lithium introduced into the negative electrode during pre-lithiation of the negative electrode according to an exemplary embodiment of the present application lowers the initial charge capacity of the negative electrode and the initial irreversible capacity of the negative electrode, and as an amount of the lithium included into the positive electrode during pre-lithiation of the positive electrode according to an exemplary embodiment of the present application increases, the initial charge capacity of the positive electrode is increase and the irreversible capacity of the negative electrode is compensated. As a result, the energy density or life performance of the battery is improved according to the degree of pre-lithiation. This means that the performance of the battery is superior to that of a battery using a negative electrode or a positive electrode on which pre-lithiation is not performed.

An exemplary embodiment of the present application may include a step of forming the negative electrode including a negative electrode current collector layer and a negative electrode active material layer on one surface or both surfaces of the negative electrode current collector layer.

The step is a step of stacking a negative electrode for a lithium secondary battery, and the step of forming a negative electrode current collector layer and a negative electrode active material layer on one surface or both surfaces of the negative electrode current collector layer includes coating a negative electrode slurry including a negative electrode active material layer composition on one surface or both surfaces of the negative electrode current collector layer, and the negative electrode active material layer composition may include one or more selected from the group consisting of a negative electrode active material, a negative electrode conductive material and a negative electrode binder.

In an exemplary embodiment of the present application, the negative electrode current collector layer generally has a thickness of 1 µm to 100 µm. Such negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a coupling force of the negative electrode active material, and may be used in various forms such as a film, a sheet, a foil, a net, a porous body, a foamed body, or a non-woven fabric body.

In an exemplary embodiment of the present application, the negative electrode current collector layer may have a thickness of 1 µm or greater and 100 µm or less, and the negative electrode active material layer may have a thickness of 20 µm or greater and 500 µm or less.

However, the thicknesses may be variously modified depending on a type and use of the negative electrode used, and are not limited thereto.

In an exemplary embodiment of the present application, the negative electrode slurry may include a negative electrode active material layer composition, and a slurry solvent.

In an exemplary embodiment of the present application, a solid content of the negative electrode slurry may satisfy a range of 5% or more and 40% or less.

In another exemplary embodiment, the solid content of the negative electrode slurry may satisfy a range of 5% or more and 40% or less, preferably 7% or more and 35% or less, and more preferably 10% or more and 30% or less.

The solid content of the negative electrode slurry may refer to a content of the negative electrode active material layer composition included in the negative electrode slurry, and may refer to a content of the negative electrode active material composition on the basis of 100 parts by weight of the negative electrode slurry.

When the solid content of the negative electrode slurry satisfies the above range, the viscosity is appropriate during formation of the negative electrode active material layer, so that particle aggregation of the negative electrode active material layer composition is minimized to efficiently form the negative electrode active material layer.

In an exemplary embodiment of the present application, the slurry solvent is not limited thereto as long as it can dissolve the negative electrode active material layer composition, but specifically, distilled water may be used.

A negative electrode according to an exemplary embodiment of the present application may be formed by coating and drying the negative electrode slurry on the negative electrode current collector layer.

Through the drying step, the slurry solvent in the negative electrode slurry may be dried.

In an exemplary embodiment of the present application, the negative electrode active material layer composition may include one or more selected from the group consisting of a negative electrode active material, a negative electrode conductive material, and a negative electrode binder.

In an exemplary embodiment of the present application, the negative electrode active material may include one or more selected from the group consisting of graphite, soft carbon, hard carbon, Si particle (SiOx (x=0)), SiOx (0<x<2), Si/C, and a Si alloy.

In the charging and discharging reactions of the lithium secondary battery, lithium discharged from the positive electrode is intercalated into the negative electrode during charging, and is deintercalated from the negative electrode to return to the positive electrode again during discharging. In the case of the silicon-based negative electrode active material, the volume change and the surface side reaction are severe, so that a large amount of lithium intercalated in the negative electrode during initial charging does not return to the positive electrode again, and thus an initial irreversible capacity increases. When the initial irreversible capacity increases, there occurs a problem that the battery capacity and the cycle are rapidly reduced.

In the present invention, in order to solve the above problems, the negative electrode of the lithium secondary battery is pre-lithiated to solve the initial irreversible capacity problem. Specifically, in the pre-lithiation process, during the lithium transfer process, the separator is formed as a transfer target, so that lithium metal is easily transferred to the negative electrode and lithium in the negative electrode active material layer can also be uniformly pre-lithiated.

In addition, the present invention solves the problems of the related art in such a manner that while using the silicon-based active material as a negative electrode active material in order to improve the capacity performance, a composite of a binder of a specific condition and a conductive material bonded to the binder is used in order to address the problems of maintaining the conductive path and the combination of the conductive material, the binder, and the active material in relation to the volume expansion.

An average particle diameter (D50) of the silicon-based active material of the present invention may be 5 µm to 10 µm, specifically 5.5 µm to 8 µm, and more specifically 6 µm to 7 µm. When the average particle diameter is within the above range, a specific surface area of the particles is within a suitable range, so that a viscosity of a negative electrode slurry is formed within an appropriate range. Accordingly, the particles constituting the negative electrode slurry are smoothly dispersed. In addition, when the size of the silicon-based active material has a value equal to or greater than the lower limit value of the range, a contact area between the silicon particles and the conductive material is excellent due to the composite made of the conductive material and the binder in the negative electrode slurry, so that a sustaining possibility of the conductive network increases, thereby increasing the capacity retention rate. In the meantime, when the average particle diameter satisfies the above range, excessively large silicon particles are excluded, so that a surface of the negative electrode is formed smooth. Accordingly, a current density non-uniformity phenomenon during charging and discharging can be prevented.

In an exemplary embodiment of the present application, the silicon-based active material generally has a characteristic BET surface area. The BET surface area of the silicon-based active material is preferably 0.01 to 150.0 m²/g, more preferably 0.1 to 100.0 m²/g, particularly preferably 0.2 to 80.0 m²/g, and most preferably 0.2 to 18.0 m²/g. The BET surface area is measured in accordance with DIN 66131 (using nitrogen).

In an exemplary embodiment of the present application, the silicon-based active material may be present, for example, in a crystalline or amorphous form, and is preferably not porous. The silicon particles are preferably spherical or splinter-shaped particles. Alternatively, but less preferably, the silicon particles may also have a fiber structure or be present in the form of a silicon-containing film or coating.

The negative electrode composition according to the present application uses the specific conductive material and binder capable of controlling the volume expansion rate during charging and discharging even when the silicon-based active material having a significantly high capacity is used within the above range. Accordingly, even when the silicon-based active material is within the above range, the negative electrode composition does not degrade the performance of the negative electrode and has excellent output characteristics in charging and discharging.

In an exemplary embodiment of the present application, the silicon-based active material may have a non-spherical shape and its sphericity (circularity) is, for example, 0.9 or less, for example, 0.7 to 0.9, for example 0.8 to 0.9, and for example 0.85 to 0.9.

In the present application, the sphericity (circularity) is determined by Equation 1, in which A is an area and P is a boundary line. [Equation 1] $4 πA / {P}^{2}$

In the related art, it is general to use only graphite-based compounds as the negative electrode active material. However, in recent years, as the demand for high-capacity batteries is increasing, attempts to mix and use silicon-based compounds are increasing in order to increase capacity. However, the silicon-based compounds have limitations in that the volume rapidly expands during the charging/discharging, resulting in damage to the conductive path formed in the negative electrode active material layer to degrade the performance of the battery. Therefore, a type of the negative electrode conductive material that is used together with the silicon-based active material is important.

In an exemplary embodiment of the present application, the negative electrode conductive material may include one or more selected from the group consisting of a particulate conductive material, a planar conductive material and a linear conductive material.

In an exemplary embodiment of the present application, the particulate conductive material may be used so as to improve conductivity of the negative electrode, and preferably has conductivity without inducing chemical change. Specifically, the conductive material may be at least one species selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present application, the particulate conductive material may have a BET specific surface area of 40 m²/g or greater and 70 m²/g or less, preferably 45 m²/g or greater and 65 m²/g or less, and more preferably 50 m²/g or greater and 60 m²/g or less.

In an exemplary embodiment of the present application, a particle diameter of the particulate conductive material may be 10 nm to 100 nm, preferably 20 nm to 90 nm, and more preferably 40 nm to 60 nm.

In an exemplary embodiment of the present application, the negative electrode conductive material may include a planar conductive material.

The planar conductive material can serve to improve conductivity by increasing surface contact among silicon particles in the negative electrode, and at the same time, to suppress the disconnection of the conductive path due to the volume expansion, and is used as a concept including as a bulk-type conductive material or a plate-like conductive material.

In an exemplary embodiment of the present application, the planar conductive material may include at least one selected from the group consisting of plate-like graphite, graphene, graphene oxide, and graphite flake, and preferably may be plate-like graphite.

In an exemplary embodiment of the present application, the average particle diameter (D50) of the planar conductive material may be 2 µm to 7 µm, specifically 3 µm to 6 µm, and more specifically 4 µm to 5 µm. When the above range is satisfied, the sufficient particle size results in easy dispersion without causing an excessive increase in viscosity of the negative electrode slurry. Therefore, the dispersion effect is excellent when dispersing using the same equipment and time.

In an exemplary embodiment of the present application, there is provided a negative electrode active material layer composition in which the planar conductive material has D10 of 0.5 µm or greater and 1.5 µm or less, D50 of 2.5 µm or greater and 3.5 µm or less and D90 of 7.0 µm or greater and 15.0 µm or less.

In an exemplary embodiment of the present application, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can affect to some extent the electrode performance by the dispersion effect, so that a planar conductive material with a low specific surface area that does not cause a problem in dispersion is used particularly preferably.

In an exemplary embodiment of the present application, the planar conductive material may have a BET specific surface area of 1 m²/g or greater.

In another exemplary embodiment, the planar conductive material may have a BET specific surface area of 1 m²/g or greater and 500 m²/g or less, preferably 5 m²/g or greater and 300 m²/g or less, and more preferably 5 m²/g or greater and 250 m²/g or less.

In another exemplary embodiment, the planar conductive material is a planar conductive material with a high specific surface area, and the BET specific surface area may satisfy a range of 50 m²/g or greater and 500 m²/g or less, preferably 80 m²/g or greater and 300 m²/g or less, and more preferably 100 m²/g or greater and 300 m²/g or less.

In another exemplary embodiment, the planar conductive material is a planar conductive material with a low specific surface area, and the BET specific surface area may satisfy a range of 1 m²/g or greater and 40 m²/g or less, preferably 5 m²/g or greater and 30 m²/g or less, and more preferably 5 m²/g or greater and 25 m²/g or less.

Other negative electrode conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductor or a semiconductor may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In the exemplary embodiment of the present application, the linear conductive material may be SWCNT.

In an exemplary embodiment of the present application, there is provided a negative electrode for a lithium secondary battery in which the negative electrode conductive material includes a planar conductive material and a linear conductive material.

When the particulate conductive material as described above is not used, the output characteristics of the secondary battery of the present invention can be improved by including linear and planar conductive materials as the negative electrode conductive material.

In an exemplary embodiment of the present application, the negative electrode conductive material may be included in an amount of 10 parts by weight or more and 40 parts by weight or less, on the basis of 100 parts by weight of the negative electrode active material layer composition.

In another exemplary embodiment, the negative electrode conductive material may be included in an amount of 10 parts by weight or more and 40 parts by weight or less, preferably 10 parts by weight or more and 30 parts by weight or less, and more preferably 15 parts by weight or more and 25 parts by weight or less, on the basis of 100 parts by weight of the negative electrode active material layer composition.

In an exemplary embodiment of the present application, the planar conductive material may be 90 parts by weight or more and 99.9 parts by weight or less, and the linear conductive material may be 0.1 part by weight or more and 10 parts by weight or less on the basis of 100 parts by weight of the negative electrode conductive material.

In another exemplary embodiment, the planar conductive material may be included in an amount of 90 parts by weight to 99.9 parts by weight, preferably 93 parts by weight to 99.9 parts by weight, and more preferably 95 parts by weight to 99.9 parts by weight on the basis of 100 parts by weight of the negative electrode conductive material.

In another exemplary embodiment, the linear conductive material may be included in an amount of 0.1 part by weight to 10 parts by weight, preferably 0.1 part by weight to 7 parts by weight, and more preferably 0.1 part by weight to 5 parts by weight on the basis of 100 parts by weight of the negative electrode conductive material.

In the exemplary embodiment of the present application, the negative electrode conductive material includes a linear conductive material and a planar conductive material, and a ratio of the linear conductive material to the planar conductive material may satisfy 0.01:1 to 0.1:1.

In the exemplary embodiment of the present application, the ratio of the linear conductive material to the planar conductive material may satisfy 0.1:1.

In the exemplary embodiment of the present application, as the negative electrode conductive material includes the linear conductive material and the planar conductive material and the composition and ratio described above are satisfied, respectively, the lifespan characteristics of an existing lithium secondary battery are not significantly affected, and the number of points where charging and discharging are possible increases, so that output characteristics are excellent at a high C-rate.

The negative electrode conductive material according to the present application has a completely different configuration from a conductive material that is applied to the positive electrode. That is, the negative electrode conductive material according to the present application serves to hold the contact between silicon-based active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

In addition, the negative electrode conductive material according to the present application is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and is completely different from the negative electrode conductive material that is applied together with the silicon-based active material as in the present invention, in terms of configuration and role.

In an exemplary embodiment of the present application, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The binder according to the exemplary embodiment of the present application serves to hold the negative electrode active material and the negative electrode conductive material in order to prevent distortion and structural deformation of the negative electrode structure when the volume of the silicon-based active material expands and relaxes. When such roles are satisfied, all of the general negative electrode binders can be applied. Specifically, a water-based binder may be used, and more specifically, a PAM-based binder may be used.

In an exemplary embodiment of the present application, the negative electrode binder may be included in an amount of 30 parts by weight or less, preferably 25 parts by weight or less, more preferably 20 parts by weight or less, and 5 parts by weight or more, and 10 parts by weight or more, on the basis of 100 parts by weight of the negative electrode active material layer composition.

In an exemplary embodiment of the present application, pre-treating the negative electrode active material layer may be further included.

In this case, the pre-treating of the negative electrode active material layer may be performed in the same manner as the pre-treating of the separator described above.

An exemplary embodiment of the present application may include a step of forming the positive electrode including a positive electrode current collector layer and a positive electrode active material layer on one surface or both surfaces of the positive electrode current collector layer.

The step is a step of stacking a positive electrode for a lithium secondary battery, and the step of forming a positive electrode current collector layer and a positive electrode active material layer on one surface or both surfaces of the positive electrode current collector layer may include coating a positive electrode slurry including a positive electrode active material layer composition on one surface or both surfaces of the positive electrode current collector layer.

In the positive electrode, the positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 3 to 500 µm, and a surface of the current collector may be formed with microscopic irregularities to enhance adhesive force of the positive electrode active material. For example, the positive electrode current collector layer may be used in various forms such as a film, a sheet, a foil, a net, a porous body, a foamed body, and a non-woven fabric body.

The positive electrode active material layer composition may include a positive electrode active material that is typically used. Specifically, the positive electrode active material may be a layered compound such as a lithium cobalt oxide (LiCoO₂) and a lithium nickel oxide (LiNiO₂), or a compound substituted with one or more transition metals; a lithium iron oxide such as LiFe₃O₄; a lithium manganese oxide such as Chemical Formula Li_{1+c1}Mn_{2-c1}O₄ (0≤c1≤0.33), LiMnO₃, LiMn₂O₃ and LiMnO₂; a lithium copper oxide (Li₂CuO₂); a vanadium oxide such as LiV₃O₈, V₂O₅ and Cu₂V₂O₇; Ni-site type lithium nickel oxide represented by chemical formula LiNi_{1-c2}M_{c2}O₂ (where M is at least one selected from the group consisting of Co, Mn, Al, Cu, Fe, Mg, B, and Ga, and satisfies 0.01≤c2≤0.3); a lithium manganese composite oxide represented by chemical formula LiMn_{2-c3}M_{c3}O₂ (where M is at least one selected from the group consisting of Co, Ni, Fe, Cr, Zn and Ta, and satisfies 0.01≤c3≤0.1), Chemical Formula LiM_{1-c4}M'_{c4}PO₄ (where M is transition metal, and M' is at least one selected from the group consisting of Co, Ni, Fe, Cr, Zn and Ta, and satisfies 0.01≤c4≤0.1) or Li₂Mn₃MO₈ (where M is at least one selected from the group consisting of Fe, Co, Ni, Cu and Zn); LiMn₂O₄ in which a part of Li of the chemical formula is substituted with an alkaline earth metal ion, or the like, but is not limited thereto. The positive electrode may be Li metal.

In an exemplary embodiment of the present application, the positive electrode active material layer composition may include one or more selected from the group consisting of LiNiₓCo_{y}Mn_{z}O₂ (x+y+z=1); LiNiₐCo_{b}Mn_{c}Al_{d}O₂(a+b+c+d=1); LiMn₂O₄; LiNi_{0.5}Mn_{1.5}O₂; and LiMₓFe_{y}PO₄(M: transition metal, x + y = 1).

The positive electrode active material layer may include a positive electrode conductive material and a positive electrode binder together with the positive electrode active material layer composition described above.

In this case, the positive electrode conductive material is used to impart conductivity to the electrode, and can be used without particular limitation as long as the positive electrode conductive material has electronic conductivity without causing a chemical change in a battery. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesion between the positive electrode active material and the positive electrode current collector. Specific examples may include polyvinylidene fluoride (PVDF), polyvinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

In an exemplary embodiment of the present application, the separator serves to separate the negative electrode and the positive electrode and to provide a movement path of lithium ions, in which any separator may be used as the separator without particular limitation as long as it is typically used in a secondary battery, and particularly, a separator having high moisture-retention ability for an electrolyte as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

In an exemplary embodiment of the present application, the method for manufacturing an electrode assembly may include a step of pressurizing the assembly to pre-lithiate the negative electrode or positive electrode.

The step may refer to a process of pre-lithiating the negative electrode or positive electrode.

In an exemplary embodiment of the present application, there is provided the method for manufacturing an electrode assembly in which in the step of pre-lithiating the negative electrode or positive electrode, the pressurization is performed at a pressure of 20 kgf/cm² to 60 kgf/cm² under a temperature condition of 60°C to 80°C.

The present disclosure provides an electrode assembly manufactured by the manufacturing method according to the present invention.

In addition, the present application provides a lithium secondary battery including a battery casing; the electrode assembly according to the present application provided inside the battery casing; and an electrolyte.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate or diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte, in which, for example, one or more species selected from the group consisting of F⁻, Cl⁻, I⁻, NO₃⁻, N(CN)₂⁻, BF₄⁻, ClO₄⁻, PF₆-, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving lifetime characteristics of the battery, suppressing a decrease in battery capacity, improving discharge capacity of the battery, and the like, in addition to the above-described electrolyte components.

The present disclosure provides a battery module including the lithium secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Hereinafter, preferred examples will be provided for better understanding of the present invention.

### <Manufacture Example>

### Manufacture of Transfer Laminate

A laminate coated with an acrylic resin at a level of 1 µm as a surface protection layer on a polyethylene terephthalate base layer was prepared. Lithium metal was deposited on the surface protection layer of the laminate to form a lithium metal layer having a thickness of 6 µm by thermal evaporation, thereby preparing a transfer laminate.

### Lithium Transfer to Separator

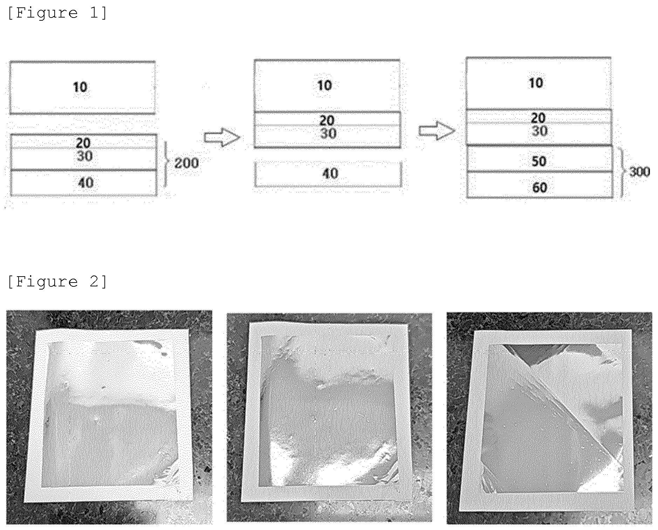

A PE separator with ceramic layers coated on both surfaces (19 µm, PE separator fabric: 9 µm, ceramic coating layer thickness on single surface: 5 µm) and a 6.2 µm thick-deposited Li/PET film were stacked and subjected to roll lamination under a load of 400 kgf, thereby causing lithium on the PET base to transfer to the ceramic coated separator. In this case, the roll lamination was performed at room temperature. Immediately after the lamination, the PET base was removed to obtain a Li-transferred separator (refer to FIG. 2).

### Manufacture of Positive Electrode or Negative Electrode

A positive electrode slurry was manufactured by setting the solid content ratios of positive electrode material (NCMA): conductive material (MWCNT): binder (PVDF-HFP) of a positive electrode to 96 wt%: 2 wt%: 2 wt% and using NMP as a solvent. In this case, the solid content in the slurry was adjusted to 65 wt%. The electrode slurry was coated on both surfaces of an aluminum current collector (thickness: 15 µm) such that the capacity per area based on the coating on the single surface was 4.2 mAh/cm², dried in a vacuum oven at 130°C for 12 hours, and subjected to roll pressing to manufacture an electrode coated with an electrode active material layer on both surfaces.

A negative electrode slurry was manufactured by setting the solid content ratios of negative electrode material (micron silicon, D50: 3.5 µm): conductive material (Denka black): binder (polyacrylic acid-based binder) of a negative electrode to 80 wt%: 10 wt%: 10wt% and using distilled water as a solvent. In this case, the solid content in the slurry was adjusted to 25 wt%. The electrode slurry was coated on both surfaces of a copper current collector (thickness: 8 µm) such that the capacity per area based on the coating on the single surface was 11.9 mAh/cm², dried in a vacuum oven at 130°C for 12 hours, and subjected to roll pressing to manufacture a negative electrode coated with an electrode active material layer on both surfaces.

### Example 1

A coin half-cell was fabricated by arranging a positive electrode including an electrode of the positive electrode manufactured above and the surface protection layer/lithium metal layer/separator such that the surface protection layer of the separator to which the lithium metal layer has been transferred was in contact with the positive electrode active material layer, and using, as a counter electrode, a 150 µm-thick lithium foil on the opposite side of the separator.

For the electrolyte solution, 1M LiPF₆-dissolved ethylene carbonate (FEC)/ethyl methyl carbonate (EMC) (= 3/7 (volume ratio)) was used. When measuring the initial charge/discharge capacities, the C-rate was set to 0.1C, charging was performed under the upper limit voltage of 4.25V, CCCV condition and cut-off current of 0.005C, and discharging was performed under the lower limit voltage of 3.0V and CC condition.

### Example 2

A coin half-cell was fabricated by arranging a negative electrode including an electrode of the negative electrode manufactured above and the surface protection layer/lithium metal layer/separator such that the surface protection layer of the separator to which the lithium metal layer has been transferred was in contact with the negative electrode active material layer, and using, as a counter electrode, a 150 µm-thick lithium foil on the opposite side of the separator. For the electrolyte solution, 1M LiPF₆-dissolved ethylene carbonate (FEC)/ethyl methyl carbonate (EMC) (= 3/7 (volume ratio)) was used in the same manner as in Example 1. When measuring the initial charge/discharge capacities, the C-rate was set to 0.1C, charging was performed under the lower limit voltage of 0.005V, CCCV condition and cut-off current of 0.005C, and discharging was performed under the upper limit voltage of 1.5V and CC condition.

### Comparative Example 1

A coin half-cell was fabricated in the same manner as Example 1, except that a ceramic coated separator was used, rather than transferring the transfer laminate to the separator. In addition, for the positive electrode, the lithium counter electrode, and the electrolyte, the same materials as in Example 1 were used, and the coin half-cell evaluation conditions were also the same as in Example 1.

### Comparative Example 2

A coin half-cell was fabricated in the same manner as Example 2, except that a ceramic coated separator was used, rather than transferring the transfer laminate to the separator. In addition, for the negative electrode, the lithium counter electrode, and the electrolyte, the same materials as in Example 2 were used, and the coin half-cell evaluation conditions were also the same as in Example 2.

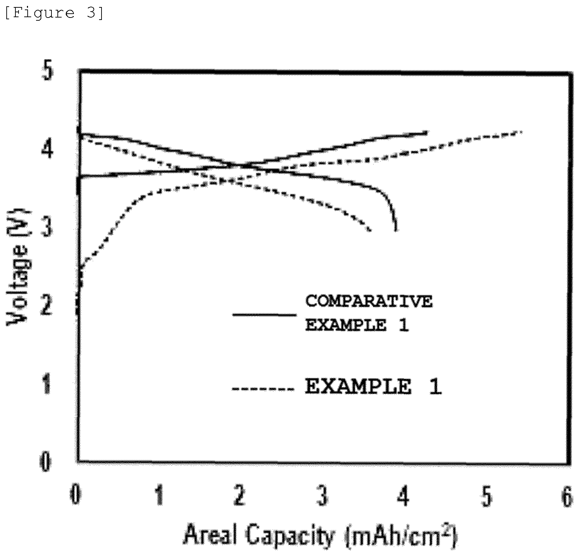

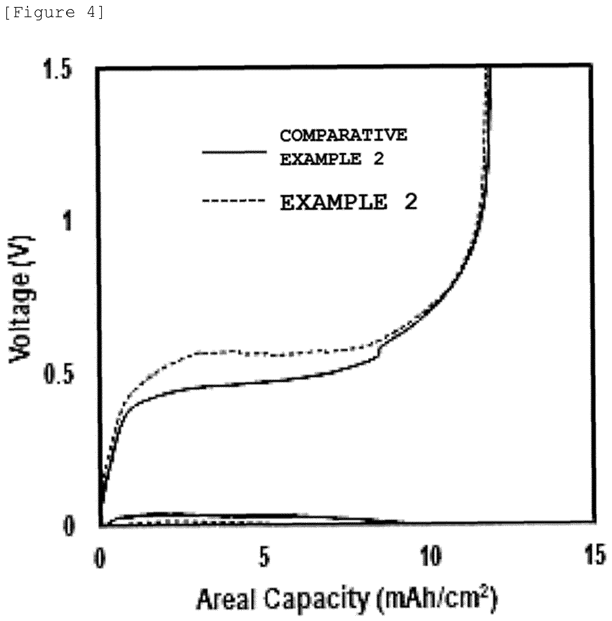

The initial charge/discharge capacities were evaluated using the coin half-cells according to Example 1 and Comparative Example 1, and the results are shown in Table 1 and FIG. 3. The initial charge/discharge capacities were evaluated using the coin half-cells according to Example 2 and Comparative Example 2, and the results are shown in Table 2 and FIG. 4.

**[Table 1]**

| NCMA/ L i | Initial charge capacity (mAh/cm²) | Initial discharge capacity (mAh/cm²) |
|---|---|---|
| Example 1 | 5.4 | 3.6 |
| Comparative Example 1 | 4.3 | 3.9 |

**[Table 2]**

| Si/Li | Initial charge capacity (mAh/cm²) | Initial discharge capacity (mAh/cm²) |
|---|---|---|
| Example 2 | 12.1 | 11.8 |
| Comparative Example 2 | 13.2 | 11.9 |

As can be seen in Tables 1 and 2, it could be confirmed that the coin half-cell according to Example 1 manufactured by the manufacturing method according to the present application had the higher initial charge capacity than the coin half-cell of Comparative Example 1 in which pre-lithiation was not performed, and that the coin half-cell according to Example 2 had the lower initial charge capacity than the coin half-cell of Comparative Example 2 in which pre-lithiation was not performed.

This shows that as the surface protection layer and the lithium metal layer are transferred to the separator at the same time, the highly reactive lithium metal layer is prevented from being exposed to the air, and direct contact between the negative electrode or positive electrode active material layer and the lithium metal layer is prevented, so that the pre-lithiation rate is controlled and the initial charge capacity is expressed well.

As can be seen in Examples 1 and 2, in the method for manufacturing an electrode assembly according to the present application, the lithium metal layer is not directly transferred to the top of the negative electrode or positive electrode active material layer as in the related art, but is transferred to one surface of the separator, and is in contact with the separator in a process of laminating the separator with a negative electrode or positive electrode during the manufacture of the battery assembly, and pre-lithiation is caused to proceed after injecting an electrolyte during manufacture of a cell.

In particular, as the surface protection layer and the lithium metal layer are transferred to the separator at the same time, the lithium metal layer can be prevented from being exposed to the air. In addition, the lithium metal layer is transferred to the separator together with the surface protection layer to form a structure in which the negative electrode or positive electrode active material layer and the surface protection layer are in contact with each other during later pre-lithiation, so that a process of providing a separate layer for adjusting a pre-lithiation rate on top of the negative electrode or positive electrode active material layer is not required. Accordingly, it is possible to easily control the pre-lithiation rate in the negative electrode or positive electrode active material layer as in the related art, and it is economical because it is not required to provide a separate layer such as a buffer layer. Further, it is possible to proceed with pre-lithiation after electrolyte injection, so there is an advantage in that a risk of ignition can be lowered.

### <Explanation of Reference Numerals and Symbols>

- 10:: separator
- 20:: lithium metal layer
- 30:: surface protection layer
- 40:: base layer
- 50:: negative electrode active material layer
- 60:: negative electrode current collector layer
- 200:: transfer laminate
- 300:: negative electrode for lithium secondary battery

## Claims

1. A method for manufacturing an electrode assembly, the method comprising:
preparing a transfer laminate in which a base layer, a surface protection layer, and a lithium metal layer are sequentially stacked;
transferring the surface protection layer and the lithium metal layer to a separator so that the lithium metal layer comes into contact with the separator; and
forming an electrode assembly by positioning the separator between a negative electrode and a positive electrode such that an electrode selected from the negative electrode and the positive electrode and the surface protection layer face each other;
wherein a thickness of the lithium metal layer transferred in the transferring of the surface protection layer and the lithium metal layer to the separator is 1 µm or greater and 10 µm or less.

2. The method of claim 1, wherein the thickness of the lithium metal layer transferred in the transferring of the surface protection layer and the lithium metal layer to the separator is 2 µm or greater and 10 µm or less.

3. The method of claim 1, wherein a surface roughness of the lithium metal layer transferred in the transferring of the surface protection layer and the lithium metal layer to the separator is 0.02 µm or greater and 0.2 µm or less.

4. The method of claim 1, wherein the forming of an electrode assembly by positioning the separator between a negative electrode and a positive electrode such that an electrode selected from the negative electrode and the positive electrode and the surface protective layer face each other comprises forming the electrode assembly by any one of methods of stacking, pressurizing and stacking, and/or winding.

5. The method of claim 1, wherein the transferring of the surface protection layer and the lithium metal layer to the separator so that the lithium metal layer comes into contact with the separator comprises a dry on dry process.

6. The method of claim 1, wherein the transferring of the surface protection layer and the lithium metal layer to the separator so that the lithium metal layer comes into contact with the separator comprises:
laminating the lithium metal layer of the transfer laminate onto one surface of the separator, and
removing the base layer.

7. The method of claim 1, wherein the negative electrode comprises a negative electrode current collector layer and a negative electrode active material layer on one surface or both surfaces of the negative electrode current collector layer,
wherein the negative electrode active material layer comprises a negative electrode active material layer composition, and
wherein the negative electrode active material layer composition comprises one or more selected from the group consisting of a negative electrode active material, a negative electrode conductive material, and a negative electrode binder.

8. The method of claim 1, wherein the positive electrode comprises a positive electrode current collector layer and a positive electrode active material layer on one surface or both surfaces of the positive electrode current collector layer,
wherein the positive electrode active material layer comprises a positive electrode active material layer composition, and
wherein the positive electrode active material layer composition comprises one or more selected from the group consisting of LiNiₓCo_{y}Mn_{z}O₂ (x+y+z=1); LiNiₐCo_{b}Mn_{c}Al_{d}O₂ (a+b+c+d=1); LiMn₂O₄; LiNi_{0.5}Mn_{1.5}O₂; and LiMₓFe_{y}PO₄ (M: transition metal, x+y=1).

9. The method of claim 1, wherein the transferring of the surface protection layer and the lithium metal layer to the separator so that the lithium metal layer comes into contact with the separator comprises:
pre-treating the separator, and
transferring the surface protection layer and the lithium metal layer onto the pre-treated separator, and
wherein the pre-treating comprises a corona treatment or a plasma treatment.

10. The method of claim 1, wherein the forming of the electrode assembly by positioning the separator between a negative electrode and a positive electrode such that an electrode selected from the negative electrode and the positive electrode and the surface protection layer face each other comprises pre-treating the surface protection layer, and
wherein the pre-treating comprises a corona treatment or a plasma treatment.

11. The method of claim 7, wherein the negative electrode active material comprises one or more selected from the group consisting of graphite, soft carbon, hard carbon, SiOx (x=0), SiOx (0<x<2), Si/C, and a Si alloy.

12. The method of claim 1, wherein the surface protection layer comprises one or more selected from the group consisting of a polymer, a conductive material and an inorganic particle.

## Patentansprüche

1. Verfahren zur Herstellung einer Elektrodenanordnung, wobei das Verfahren umfasst:
Herstellen eines Transferlaminats, in dem eine Basisschicht, eine Oberflächenschutzschicht und eine Lithiummetallschicht der Reihe nach übereinandergeschichtet sind,
Übertragen der Oberflächenschutzschicht und der Lithiummetallschicht auf einen Separator, sodass die Lithiummetallschicht mit dem Separator in Kontakt kommt, und
Bilden einer Elektrodenanordnung durch Positionieren des Separators zwischen einer negativen Elektrode und einer positiven Elektrode derart, dass eine Elektrode, ausgewählt aus der negativen Elektrode und der positiven Elektrode, und die Oberflächenschutzschicht einander zugewandt sind,
wobei eine Dicke der Lithiummetallschicht, die beim Übertragen der Oberflächenschutzschicht und der Lithiummetallschicht auf den Separator übertragen wird 1 µm oder größer und 10 µm oder kleiner ist.

2. Verfahren nach Anspruch 1, wobei die Dicke der Lithiummetallschicht, die beim Übertragen der Oberflächenschutzschicht und der Lithiummetallschicht auf den Separator übertragen wird, 2 µm oder größer und 10 µm oder kleiner ist.

3. Verfahren nach Anspruch 1, wobei eine Oberflächenrauheit der Lithiummetallschicht, die beim Übertragen der Oberflächenschutzschicht und der Lithiummetallschicht auf den Separator übertragen wird, 0,02 µm oder größer und 0,2 µm oder kleiner ist.

4. Verfahren nach Anspruch 1, wobei das Bilden einer Elektrodenanordnung durch Positionieren des Separators zwischen einer negativen Elektrode und einer positiven Elektrode derart, dass eine Elektrode, ausgewählt aus der negativen Elektrode und der positiven Elektrode, und die Oberflächenschutzschicht einander zugewandt sind, das Bilden der Elektrodenanordnung durch irgendein Verfahren von Übereinanderschichten, Druckbeaufschlagen und Übereinanderschichten und/oder Wickeln umfasst.

5. Verfahren nach Anspruch 1, wobei das Übertragen der Oberflächenschutzschicht und der Lithiummetallschicht auf den Separator, sodass die Lithiummetallschicht mit dem Separator in Kontakt kommt, ein Trocken-auf-TrockenVerfahren umfasst.

6. Verfahren nach Anspruch 1, wobei das Übertragen der Oberflächenschutzschicht und der Lithiummetallschicht auf den Separator, sodass die Lithiummetallschicht mit dem Separator in Kontakt kommt, folgendes umfasst:
Laminieren der Lithiummetallschicht des Transferlaminats auf eine Oberfläche des Separators und
Entfernen der Basisschicht.

7. Verfahren nach Anspruch 1, wobei die negative Elektrode eine Stromkollektorschicht für eine negative Elektrode und eine Aktivmaterialschicht für eine negative Elektrode auf einer Oberfläche oder beiden Oberflächen der Stromkollektorschicht für eine negative Elektrode umfasst,
wobei die Aktivmaterialschicht für eine negative Elektrode eine Aktivmaterialschichtzusammensetzung für eine negative Elektrode umfasst und
wobei die Aktivmaterialschichtzusammensetzung für eine negative Elektrode eines oder mehrere, ausgewählt aus der Gruppe, bestehend aus einem Aktivmaterial für eine negative Elektrode, einem leitfähigen Material für eine negative Elektrode und einem Bindemittel für eine negative Elektrode, umfasst.

8. Verfahren nach Anspruch 1, wobei die positive Elektrode eine Stromkollektorschicht für eine positive Elektrode und eine Aktivmaterialschicht für eine positive Elektrode auf einer Oberfläche oder beiden Oberflächen der Stromkollektorschicht für eine positive Elektrode umfasst,
wobei die Aktivmaterialschicht für eine positive Elektrode eine Aktivmaterialschichtzusammensetzung für eine positive Elektrode umfasst und
wobei die Aktivmaterialschichtzusammensetzung für eine positive Elektrode eines oder mehrere, ausgewählt aus der Gruppe, bestehend aus LiNiₓCo_{y}Mn_{z}O₂ (x+y+z=1), LiNiₐCo_{b}Mn_{c}Al_{d}O₂ (a+b+c+d=1), LiMn₂O₄, LiNi_{0,5}Mn_{1,5}O₂ und LiMₓFe_{y}PO₄ (M: Übergangsmetall, x+y=1), umfasst.

9. Verfahren nach Anspruch 1, wobei das Übertragen der Oberflächenschutzschicht und der Lithiummetallschicht auf den Separator, sodass die Lithiummetallschicht mit dem Separator in Kontakt kommt, folgendes umfasst:
Vorbehandeln des Separators und
Übertragen der Oberflächenschutzschicht und der Lithiummetallschicht auf den vorbehandelten Separator und
wobei das Vorbehandeln eine Koronabehandlung oder eine Plasmabehandlung umfasst.

10. Verfahren nach Anspruch 1, wobei das Bilden der Elektrodenanordnung durch Positionieren des Separators zwischen einer negativen Elektrode und einer positiven Elektrode derart, dass eine Elektrode, ausgewählt aus der negativen Elektrode und der positiven Elektrode, und die Oberflächenschutzschicht einander zugewandt sind, ein Vorbehandeln der Oberflächenschutzschicht umfasst und
wobei das Vorbehandeln eine Koronabehandlung oder eine Plasmabehandlung umfasst.

11. Verfahren nach Anspruch 7, wobei das Aktivmaterial für eine negative Elektrode eines oder mehrere, ausgewählt aus der Gruppe, bestehend aus Graphit, weichem Kohlenstoff, hartem Kohlenstoff, SiOx (x=O), SiOx (0<x<2), Si/C und einer Si-Legierung, umfasst.

12. Verfahren nach Anspruch 1, wobei die Oberflächenschutzschicht eines oder mehrere, ausgewählt aus der Gruppe, bestehend aus einem Polymer, einem leitfähigen Material und einem anorganischen Partikel, umfasst.

## Revendications

1. Procédé de fabrication d'un ensemble électrode, le procédé comprenant les étapes suivantes :
préparer un stratifié de transfert dans lequel une couche de base, une couche de protection de surface et une couche métallique de lithium sont empilées séquentiellement ;
transférer la couche de protection de surface et la couche métallique de lithium vers un séparateur de sorte que la couche métallique de lithium vienne en contact avec le séparateur ; et
former un ensemble électrode en positionnant le séparateur entre une électrode négative et une électrode positive de sorte qu'une électrode sélectionnée parmi l'électrode négative et l'électrode positive et la couche de protection de surface se fassent face ;
dans lequel une épaisseur de la couche métallique de lithium transférée dans le transfert de la couche de protection de surface et de la couche métallique de lithium vers le séparateur est de 1 µm ou plus et de 10 µm ou moins.

2. Procédé selon la revendication 1, dans lequel l'épaisseur de la couche métallique de lithium transférée dans le transfert de la couche de protection de surface et de la couche métallique de lithium vers le séparateur est de 2 µm ou plus et de 10 µm ou moins.

3. Procédé selon la revendication 1, dans lequel une rugosité de surface de la couche métallique de lithium transférée dans le transfert de la couche de protection de surface et de la couche métallique de lithium vers le séparateur est de 0,02 µm ou plus et de 0,2 µm ou moins.

4. Procédé selon la revendication 1, dans lequel le fait de former un ensemble électrode en positionnant le séparateur entre une électrode négative et une électrode positive de sorte qu'une électrode sélectionnée parmi l'électrode négative et l'électrode positive et la couche de protection de surface se fassent face comprend la formation de l'ensemble électrode par l'un quelconque des procédés d'empilement, de mise sous pression et d'empilement, et/ou d'enroulement.

5. Procédé selon la revendication 1, dans lequel le transfert de la couche de protection de surface et de la couche métallique de lithium vers le séparateur de sorte que la couche métallique de lithium vienne en contact avec le séparateur comprend un procédé sec sur sec.

6. Procédé selon la revendication 1, dans lequel le transfert de la couche de protection de surface et de la couche métallique de lithium vers le séparateur de sorte que la couche métallique de lithium vienne en contact avec le séparateur comprend les étapes suivantes :
laminer la couche métallique de lithium du stratifié de transfert sur une surface du séparateur, et
retirer la couche de base.

7. Procédé selon la revendication 1, dans lequel l'électrode négative comprend une couche collectrice de courant d'électrode négative et une couche de matériau actif d'électrode négative sur une surface ou les deux surfaces de la couche collectrice de courant d'électrode négative,
dans lequel la couche de matériau actif d'électrode négative comprend une composition de couche de matériau actif d'électrode négative, et
dans lequel la composition de couche de matériau actif d'électrode négative comprend un ou plusieurs sélectionnés dans le groupe constitué par un matériau actif d'électrode négative, un matériau conducteur d'électrode négative et un liant d'électrode négative.

8. Procédé selon la revendication 1, dans lequel l'électrode positive comprend une couche collectrice de courant d'électrode positive et une couche de matériau actif d'électrode positive sur une surface ou les deux surfaces de la couche collectrice de courant d'électrode positive,
dans lequel la couche de matériau actif d'électrode positive comprend une composition de couche de matériau actif d'électrode positive, et
dans lequel la composition de couche de matériau actif d'électrode positive comprend un ou plusieurs éléments sélectionnés dans le groupe constitué par LiNiₓCo_{y}Mn_{z}O₂ (x+y+z=1) ; LiNiₐCO_{b}Mn_{c}Al_{d}O₂ (a+b+c+d=1) ; LiMn₂O₄ ; LiNi_{0,5}Mn_{1,5}O₂ ; et LiMₓFe_{y}PO₄ (M : métal de transition, x+y=1).

9. Procédé selon la revendication 1, dans lequel le transfert de la couche de protection de surface et de la couche métallique de lithium vers le séparateur de sorte que la couche métallique de lithium vienne en contact avec le séparateur comprend les étapes suivantes :
prétraiter le séparateur, et
transférer la couche de protection de surface et la couche métallique de lithium sur le séparateur prétraité, et
dans lequel le prétraitement comprend un traitement corona ou un traitement au plasma.

10. Procédé selon la revendication 1, dans lequel le fait de former l'ensemble électrode en positionnant le séparateur entre une électrode négative et une électrode positive de sorte qu'une électrode sélectionnée parmi l'électrode négative et l'électrode positive et la couche de protection de surface se fassent face comprend le prétraitement de la couche de protection de surface, et
dans lequel le prétraitement comprend un traitement corona ou un traitement au plasma.

11. Procédé selon la revendication 7, dans lequel le matériau actif d'électrode négative comprend un ou plusieurs sélectionnés dans le groupe constitué par le graphite, le carbone mou, le carbone dur, SiOx (x=0), SiOx (0<x<2), Si/C et un alliage de Si.

12. Procédé selon la revendication 1, dans lequel la couche de protection de surface comprend un ou plusieurs sélectionnés dans le groupe constitué par un polymère, un matériau conducteur et une particule inorganique.
